Europäisches Patentamt

European Patent Office

Office européen des brevets

(11) Veröffentlichungsnummer: **0 431 286 A2**

# (12) EUROPÄISCHE PATENTANMELDUNG

(21) Anmeldenummer: 90119949.7

(22) Anmeldetag: 18.10.90

(51) Int. Cl.⁵: **C03C  6/00**, C03C 1/00,
E04C 2/02, E04C 2/30

(30) Priorität: 25.11.89 DE 3939089

(43) Veröffentlichungstag der Anmeldung:
12.06.91 Patentblatt  91/24

(84) Benannte Vertragsstaaten:
AT BE CH DE DK ES FR GB GR IT LI LU NL SE

(71) Anmelder: **Beteiligungen Sorg GmbH & Co.
KG**
**Stoltestr. 23**
**W-8770 Lohr/Main(DE)**

(72) Erfinder: **Sorg, Helmut, Dipl.-Ing.**
**Im Himbeergrund 27**
**W-8752 Glattbach(DE)**
Erfinder: **Pieper, Helmut, Dipl.-Ing.**
**Buchenstrasse 19**
**W-8770 Lohr/Main(DE)**
Erfinder: **Zschocher, Hartmut, Dr.-Ing.**
**Bergstrasse 19**
**W-8752 Blankenbach(DE)**

(74) Vertreter: **Schulze Horn, Stefan, Dipl.-Ing.
M.Sc.**
**Goldstrasse 36**
**W-4400 Münster(DE)**

(54) **Silikatischer Glasbaustoff.**

(57) Silikatischer Glasbaustoff mit ausreichend glasbildenden Anteilen, der die nachfolgenden Zusammensetzungsbestandteile aufweist

| Schwermetalle | 0,1 bis 20 % |
|---|---|
| Schwefel | 0,2 bis 0,8 % |
| Chlor | 0 bis 3,5 % |
| Fluor | 0 bis 2,0 % |

und im wesentlichen aus Abfallstoffen mit silikatischen Anteilen hergestellt ist, wobei zur Erzielung ausreichender glasbildender Eigenschaften Gemengeanteile entsprechende Mengen an $SiO_2$, $Al_2O_3$, CaO, MGO, $Na_2O$ oder $K_2O$ oder mehrere dieser verbindungen den Abfällen beigefügt sind. Mit diesem Baustoff ist es möglich, giftige Abfallstoffe in ungefährlicher Art zu binden.

EP 0 431 286 A2

## SILIKATISCHER GLASBAUSTOFF

Die Erfindung betrifft einen silikatischen Glasbaustoff mit ausreichend glasbildenden Anteilen. Silikatische Baustoffe der eingangs genannten Art können in Form von Pellets, also geformten, oder auch in Form von unregelmäßigen, nicht geformten Partikeln unterschiedlichster Größe sowie ggf. auch als vergleichsweise große zusammenhängende, geformte oder ungeformte Stücke in den verschiedensten Bereichen des Hoch-und Tiefbaus, insbesondere des Straßenbaus, verwendet werden, sie sind auf diesen Anwendungsbereich aber nicht beschränkt.

Aufgrund der großen Anzahl natürlich vorkommender oder einfach herzustellender Baustoffe haben sich Glasbaustoffe, d. h. solche, die in der Regel zwar nicht durchsichtig aber im wesentlichen wie Glas und aus entsprechenden Gemengen hergestellt sind, auf dem Markt kaum durchsetzten können.

Der Erfindung liegt daher die Aufgabe zugrunde, einen silikatischen Glasbaustoff der eingangs genannten Art zu schaffen, dessen wirtschaftlicher Nutzen vergleichsweise groß ist.

Diese Aufgabe wird erfindungsgemäß dadurch gelöst, daß der silikatische Glasbaustoff neben ausreichenden Anteilen an glasbildenden Gemengeanteilen die nachfolgenden Zusammensetzungsbestandteile aufweist

| | |
|---|---|
| Schwermetalle | 0,1 bis 20 % |
| Schwefel | 0,2 bis 0,8 % |
| Chlor | 0 bis 3,5 % |
| Fluor | 0 bis 2,0 % |

und im wesentlichen aus Abfallstoffen mit silikatischen Anteilen hergestellt ist, wobei zur Erzielung ausreichender glasbildender *) Gemengeanteile entsprechender Mengen an $SiO_2$, $Al_2O_3$, CaO, MgO, $Na_2O$ oder $K_2O$ oder mehrere dieser Verbindungen den Abfällen hinzugefügt sein können.

Durch die Erfindung wird es unter anderem möglich, Abfälle, die neben silikatischen Anteilen weitere Bestandteile enthalten, die entweder wegen ihrer chemischen Zusammensetzung oder ihres mineralogischen Aufbaus gesundheitsgefährdend sind, zu einem vergleichsweise preiswerten Baustoff zu verarbeiten. Ein weiterer Vorteil besteht darin, daß die durch die Erfindung verarbeiteten Problemabfälle dauerhaft und sicher endgelagert werden, da sich der erfindungsgemäße silikatische Glasbaustoff auch in agressiver Umgebung, wenigstens jedoch in der Umgebung, der Baustoffe üblicherweise ausgesetzt sind, nicht verändert, wie es etwa beim Einarbeiten von Problemabfällen in Beton vorkommt.

Ein erfindungsgemäßer silikatischer Glasbaustoff liegt vorzugsweise in amorpher Form vor.

Typische Abfälle mit silikatischen Anteilen, die besonders vorteilhaft gemäß der Erfindung verwendbar sind, sind asbesthaltige Bauabfälle, wie z. B. aus der Entsorgung von Altlasten, Filter- und Rauchgasreinigungsrückstände, z. B. aus thermischen Abfallverwertungsanlagen oder organische Bestandteile enthaltende Schlämme, wie Lackschlamm, Klärschlamm und Galvanikschlamm.

Vorteilhafterweise fließt der silikatische Glasbaustoff in flüssigem Zustand aus einem Glasschmelzofen. Er kann dann, vorzugsweise, in einer Glaskühl- und -formgebungseinrichtung zu einem formstabilen, festen Körper geformt werden. In der Glaskühl- und -formgebungseinrichtung können zusätzliche Einrichtungen vorgesehen sein, durch die das flüssige Material aus dem Glasschmelzofen so behandelt wird, daß feste, feinkörnige Materialien so in seine noch plastische Oberfläche eindringen, daß die Oberfläche griffig wird. Dies ist besonders für die Weiterverwendung als Straßenbau-oder Betonzuschlagstoff von großem Vorteil, da hiermit Bedingungen geschaffen werden, die eine besonders gute Haftung für die einzusetzenden Bindemittel, wie Asphalt, Zementbrei oder Gipsmasse o. dgl. erreicht werden.

Geformte erfindungsgemäße silikatische Glasbaustoffe haben vorzugsweise eine Kantenlänge zwischen 1 und 50 mm und eine Dicke zwischen 1 und 20 mm.

Als feinkörnige feste Materialien, die in die Baustoffoberfläche eindringen, eignen sich insbesondere Sandkörner im Korngrößenbereich zwischen 0,04 und 4 mm.

Die erfindungsgemäß zu verwendenden Bestandteile und Verfahrensbedingungen unterliegen in ihrer Größe, Formgestaltung, Materialauswahl und technischen Konzeption sowie den Verfahrensbedingungen im übrigen keinen besonderen Ausnahmebedingungen, so daß die in dem jeweiligen Anwendungsgebiet

*) Eigenschaften

bekannten Auswahlkriterien uneingeschränkt Anwendung finden können.

Zweckmäßige Ausgestaltungen des Erfindungsgegenstandes, die einen besonders hohen technischen und wirtschaftlichen Nutzen erfindungsgemäßer silikatischer Glasbaustoffe gewährleisten, sind in den Unteransprüchen enthalten.

Als ausreichend glasbildendes Gemenge werden Stoffzusammensetzungen nach den Ansprüchen 3 bis 6 bevorzugt.

**Ansprüche**

1. Silikatischer Glasbaustoff mit ausreichend glasbildenden Anteilen,
dadurch gekennzeichnet,
daß der silikatische Glasbaustoff neben ausreichenden Anteilen an glasbildenden Gemengeanteilen die nachfolgenden Zusammensetzungsbestandteile aufweist

| Schwermetalle | 0,1 bis 20 % |
| Schwefel | 0,2 bis 0,8 % |
| Chlor | 0 bis 3,5 % |
| Fluor | 0 bis 2,0 % |

und im wesentlichen aus Abfallstoffen mit silikatischen Anteilen hergestellt ist, wobei zur Erzielung ausreichender glasbildender *) Gemengeanteile entsprechender Mengen an $SiO_2$, $Al_2O_3$, CaO, MGO, $Na_2O$ oder $K_2O$ oder mehrere dieser Verbindungen den Abfällen hinzugefügt sein können.

2. Glasbaustoff nach Anspruch 1, dadurch gekennzeichnet, daß er in amorpher Form vorliegt.

3. Glasbaustoff nach Anpruch 1 oder 2, dadurch gekennzeichnet, daß er einen Anteil von 37 bis 70 % $SiO_2$ aufweist.

4. Glasbaustoff nach einem der Ansprüche 1 bis 3, dadurch gekennzeichnet, daß er einen Anteil von 2 bis 14 % $Al_2O_3$ aufweist.

5. Glasbaustoff nach einem der Ansprüche 1 bis 4, dadurch gekennzeichnet, daß er einen Anteil von 10 bis 49 % CaO oder MgO oder CaO und MgO aufweist.

6. Glasbaustoff nach einem der Ansprüche 1 bis 5, dadurch gekennzeichnet, daß er einen Anteil von 1,5 bis 15 % $Na_2O$ oder $K_2O$ oder $Na_2O$ und $K_2O$ aufweist.

7. Glasbaustoff nach einem der Ansprüche 1 bis 6, dadurch gekennzeichnet, daß der Abfallstoff mit silikatischem Anteil ein asbesthaltiger Bauabfall oder Filter- und Rauchgasreinigungsrückstände oder ein organische Bestandteile enthaltender Schlamm oder eine Mischung dieser Abfälle ist.

8. Glasbaustoff nach einem der Ansprüche 1 bis 7, dadurch gekennzeichnet, daß er ein in einer einem Glaschmelzofen nachgeordneten Glaskühl- und -formgebungseinrichtung geformter formstabiler fester Körper ist.

9. Glasbaustoff nach einem der Ansprüche 1 bis 8, dadurch gekennzeichnet, daß er in seine Oberfläche zumindest teilweise eingedrungene feste, feinkörige Materialien aufweist.

*) Eigenschaften